# NEUE EUROPÄISCHE PATENTSCHRIFT

(11) **EP 2 187 242 B2**
(45) Veröffentlichungstag und Bekanntmachung des Hinweises auf die Entscheidung über den Einspruch: **26.08.2015**
(45) Hinweis auf die Patenterteilung: 07.09.2011
(21) Anmeldenummer: 08105804.2
(22) Anmeldetag: 17.11.2008
(51) Int. Cl.: G01V 8/12, G02B 3/14

(54) **Optoelektronischer Sensor und Verfahren zum Fokussieren**
Optoelectronic sensor and method to focus
Capteur optoélectronique et méthode pour la mise au point du premier

(43) Veröffentlichungstag der Anmeldung: 19.05.2010
(73) Patentinhaber: SICK AG, 79183 Waldkirch (DE)
(72) Erfinder: Nübling, Ralf Ulrich, 79211, Denzlingen (DE); Ringwald, Siegfried, 79215, Elzach (DE)
(74) Vertreter: Hehl, Ulrich

(56) Entgegenhaltungen:
- WO-A-97/36193
- WO-A-2006/035407
- WO-A-2008/076399
- DE-A1- 1 978 390
- DE-A1- 19 726 581
- DE-A1- 19 921 479
- DE-A1-102005 015 500
- DE-U1-202006 017 268
- GB-A- 1 327 503
- US-A1- 2008 277 480
- Wikipedia: "Position sensitive Device"

## Beschreibung

Die Erfindung betrifft einen optoelektronischen Sensor mit einem brennweitenverstellbaren optischen Element und ein Verfahren zum Fokussieren nach dem Oberbegriff von Anspruch 1 beziehungsweise 8.

Sollen optoelektronische Sensoren über einen größeren Arbeitsbereich mit hoher Genauigkeit arbeiten können, so ist eine Anpassung der Fokuslage erforderlich. Je nach Typ des Sensors ist eine Optik im Sendepfad, im Empfangspfad oder in beiden Pfaden vorhanden. Eine Kamera beispielsweise benötigt eine Optik, welche die Szenerie scharf auf dem Bildsensor abbildet. Lichttaster oder Laserscanner, besonders Codescanner arbeiten meist mit einem fokussierten Sendelichtstrahl, bei dem eine Optik einer Laserquelle abhängig von dem voreingestellten Arbeitsbereich oder etwa einer aktuellen Lesedistanz nachfokussiert wird.

Üblicherweise wird zur Veränderung der Fokuslage in optoelektronischen Sensoren elektromechanisch oder optomechanisch die Position der Linsen und damit die Schnittweite der Sende- oder Empfangslinse verstellt. Solche Lösungen erfordern viel Bauraum und stellen zudem hohe Ansprüche an den mechanischen Aufbau zur präzisen Einstellbarkeit, damit eine vorgegebene Fokuslage auch tatsächlich angenommen wird.

In jüngerer Zeit sind verschiedene Flüssigkeitslinsen vorgestellt worden, welche statt einer Veränderung der Schnittweite unmittelbar in der Brennweite der Linse selbst mittels einer Spannungsansteuerung variierbar sind. Dabei wird der sogenannte Elektrobenetzungseffekt (electrowetting) ausgenutzt, indem zwei nicht mischbare Flüssigkeiten in einer Kammer übereinander angeordnet werden. Bei Anlegen einer Steuerspannung ändern die beiden Flüssigkeiten ihre Oberflächenspannung in unterschiedlicher Weise, so dass die innere Grenzfläche der Flüssigkeiten spannungsabhängig ihre Krümmung verändert.

Die mechanische Bewegung der Linse entfällt hierbei gänzlich. Dafür ist die Linse sehr anfällig gegenüber Vibrationen, Stößen und Schock, wodurch die beiden Flüssigkeiten durcheinandergemischt werden und dann möglicherweise eine Emulsion bilden, jedenfalls die innere Grenzfläche zumindest vorübergehend in ihren optischen Eigenschaften stark beeinträchtigt wird. Auf Basis derartiger Flüssigkeitslinsen ist aus der DE 10 2005 015 500 A1 oder der DE 20 2006 017 268 U1 ein optoelektronischer Sensor mit Fokusverstellung bekannt.

Ein weiteres, im Stand der Technik nicht diskutiertes Problem von Flüssigkeitslinsen ist, dass die Ansteuerung keineswegs treu zu der gewünschten Fokuslage führt. Gründe hierfür sind etwa Alterungseffekte, Temperatureinflüsse und ein Hystereseverhalten bei der Umfokussierung. Der vorgegebene definierte Arbeitsabstand ist also mit einem Ablagefehler behaftet, der die Genauigkeit des Sensors beeinträchtigt. Das mag im Bereich der Unterhaltungselektronik, etwa integrierter Handykameras hinnehmbar sein, für den die Flüssigkeitslinsen derzeit entwickelt und eingesetzt werden. Eine auch nur minimale Lesefehlererhöhung eines Codelesers, bei dem Lesefehlerraten unterhalb des Prozentbereichs optimiert werden, verhindert dagegen den Einsatz in der Logistikautomation. Das gilt erst recht in der Sicherheitstechnik, wo optoelektronische Sensoren einen Gefahrenbereich vor Zugriffen durch Bedienpersonal schützen, etwa an einer Presse, und die bei einem Eingriff sofort den Gefahrenbereich absichern.

Aus der US2008/0277480 A1 ist eine temperaturkompensierte Autofokussteuerung bekannt, die eine nach dem Elektrobenetzungseffekt arbeitende Flüssigkeitslinse verwendet. Ein Temperaturfühler misst die aktuelle Temperatur, um die Steuerbefehle an die Flüssigkeitslinse temperaturabhängig anzupassen.

Die GB 1,327,503 offenbart eine Flüssigkeitslinse, bei der die Krümmung einer lichtdurchlässigen Membran mittels Piezoelement verändert wird. In einer Ausführungsform für einen Laser zum Beschreiben einer Folie wird der Fokus der Flüssigkeitslinse geregelt. Dazu werden mittels zweier Strahlteiler zwei Teilauskopplungen aus dem remittierten Laserstrahl je einer Fotodiode zugeführt und aus der Differenz, der Fotoströme ein Regelungssignal abgeleitet, um den Laserstrahl auf die Ebene der Folie zu bündeln.

In der WO 2008/076399 A2 werden Flüssigkeitslinsen in optischen Bildsensoren diskutiert. Dabei werden die aufgenommenen Bilder mit verschiedenen Bildschärfemaßen ausgewertet, um die Fokuslage zu optimieren.

In der WO 97/36193 A1 wird ein optoelektronisches Abbildungssystem für industrielle Anwendungen vorgeschlagen, welches zwei flexible Linsen und eine Aktorik aufweist, mit deren Hilfe die Oberflächenwölbung der Linsen verstellbar ist. In einem Speicher sind Werte für die Einstellung der Aktorik in Abhängigkeit einer gewünschten Zoom-Stufe abgelegt.

Daher ist Aufgabe der Erfindung, den Einsatz brennweitenverstellbarer Linsen in optoelektronischen Sensoren mit hohen Genauigkeitsanforderungen zu ermöglichen.

Diese Aufgabe wird durch einen optoelektronischen Sensor gemäß Anspruch 1 und ein Verfahren zum Fokussieren eines optoelektronischen Sensors gemäß Anspruch 8 gelöst.

Dabei geht die erfindungsgemäße Lösung von dem Prinzip aus, die Brennweite des optischen Elements nicht nur durch Ansteuerung zu ändern, sondern auch die dadurch erreichte Fokussierung zu überprüfen und gegebenenfalls nachzuregeln. Wegen der direkten optischen Rückkopplung wird eine stabile Fokuslage auch dann erreicht, wenn das optische Element aufgrund von Alterung, Temperatur oder Hysterese anders reagiert als erwartet. Die für die Regelung bestimmte tatsächliche Brennweite ist also die optisch wirkende Ist-Brennweite, nicht die über die Stellgröße eingestellte SollBrennweite, wobei die Regelung die Unterschiede ausgleicht.

Daraus ergibt sich der Vorteil einer präzisen Fokuslageneinstellung mit Kompensation von Fremdeinflüssen und daraus eine Verbesserung der Auflösung. Es müssen dann keine zumindest derzeit unerfüllbaren Anforderungen an die Langzeit- oder Temperaturstabilität des optischen Elements selbst gestellt werden.

Die Stellgröße ist in der Praxis meist eine elektrische Größe, wie ein Spannungs- oder Stromsignal jeder denkbaren Ausgestaltung etwa als Gleichstromsignal oder gepulst. Die Brennweitenänderung kann an verschiedenen optisch relevanten Eigenschaften des optischen Elements anknüpfen, zu denen Brechungsindex und Krümmungsradius zählen. Unter dem Begriff optisches Element sind also neben Flüssigkeitslinsen beispielsweise auch Gellinsen angesprochen, die ihre gewünschte Gestalt temperaturabhängig annehmen und über eine Heizung gesteuert werden, oder die ein Mischungsverhältnis oder andere Eigenschaften der beteiligten Gele oder Flüssigkeiten ändern.

Einige Beispiele für optoelektronische Sensoren sind Lichtschranken, Lichttaster, zwei- und dreidimensionale Kameras einschließlich Sicherheitskameras sowie Laserscanner oder Codeleser auf Scanner- oder Kamerabasis.

Das optische Element weist bevorzugt einen flüssigkeitsgefüllten Hohlraum auf, der zumindest an einer Seite von einer Membran abgeschlossen ist, die dafür ausgebildet ist, bei Druckveränderungen der Flüssigkeit in dem Hohlraum ihre Krümmung zu verändern, und wobei insbesondere Pumpelemente, beispielsweise Piezoelemente, vorgesehen sind, um Druckveränderungen durch Pumpen von Flüssigkeit in den Hohlraum oder aus dem Hohlraum zu erzeugen. Eine solche Flüssigkeitslinse basiert also anders als die einleitend diskutierten in Sensoren eingesetzten Flüssigkeitslinsen gerade nicht auf Elektrobenetzung und ist damit wesentlich widerstandsfähiger gegenüber Erschütterungen. Sie kann außerdem im Gegensatz zu üblichen Begrenzungen von Flüssigkeitslinsen auf Durchmesser von 3mm oder weniger auch mit größeren Aperturen von 5mm bis 15mm oder darüber hinaus hergestellt werden

Vorteilhafterweise weist das optische Element eine brennweitenverstellbare optisch aktive Fläche und eine weitere optisch aktive Fläche auf, die insbesondere als Kollimatorlinse ausgebildet ist. Dabei wird sozusagen eine herkömmlich flache Seite der verstellbaren Linse ausgenutzt, um weitere optische Eigenschaften zu integrieren. Eine wesentliche Anwendungsmöglichkeit ist der Verzicht auf eine vorgeschaltete Kollimatorlinse für eine Halbleiterlichtquelle. Die weitere optisch aktive Fläche kann aber auch sonst beliebig konvex, konkav, als Freiformfläche, diffraktives optisches Element (DOE), holografisches optisches Element (HOE) oder dergleichen ausgebildet sein und damit ein separates Element ersetzen.

Die Brennweitenregelung weist bevorzugt ein Referenzelement zur Bewertung des Sendestrahls anhand einer Intensität, eines Intensitätsverhältnisses, einer Spotform und/oder einer Spotgröße auf, insbesondere eine oder mehrere Photodioden, eine Zeile oder eine Matrix von Lichtempfangselementen. Die Photodioden sind noch bevorzugter temperaturkompensiert. Dabei kann zusätzlich vor dem Referenzelement eine Optik oder Sammellinse vorgesehen sein, um das Spotabbild zu fokussieren. Es ist eine Pegelbewertung, aber auch eine ein- oder mehrdimensionale Spotbewertung denkbar. Je nach Anforderung wird ein aufwändigeres Referenzelement eingesetzt, um genauere Informationen über die tatsächliche Brennweite zu gewinnen, und somit ein optimaler Kompromiss zwischen Kosten und Genauigkeit gefunden.

Dem optischen Element ist bevorzugt ein optisches Verzweigungselement zugeordnet, insbesondere ein Strahlteiler oder ein Teilerspiegel, um einen Teilstrahl des Sendestrahls zur Bewertung der tatsächlichen Brennweite auszukoppeln. Der Sendestrahl bleibt damit weitgehend ungestört, sofern der Teilstrahl nur einen verzichtbaren Teil der Energie auskoppelt, und dennoch werden genaue Informationen über den Sendestrahl gewonnen.

Die Brennweitenregelung hält bevorzugt eine Tabelle oder eine Berechnungsvorschrift, welche eine Zuordnung zwischen tatsächlicher Brennweite und Signalen des Referenzelements schafft. Diese Tabelle oder Berechnungsvorschrift wird ab Werk oder durch Aufruf einer Teach-Funktion kalibriert oder eingelernt. Ohne besonderen Aufwand ist damit im Betrieb aus dem Signal sofort die aktuelle Brennweite entnehmbar, die dann für die Regelung verwendet wird.

Bevorzugt ist ein Temperaturfühler vorgesehen, wobei die elektrische Steuergröße von der Brennweitenregelung temperaturabhängig veränderbar ist, insbesondere indem die Tabelle oder Berechnungsvorschrift verschiedene Temperaturen berücksichtigt. Die Eigenschaften des optischen Elements sind temperaturabhängig, und dies wird somit einfach und genau ausgeglichen.

Die Brennweitenregelung ist bevorzugt dafür ausgebildet, die tatsächliche Brennweite anhand der Bildschärfe der von dem Lichtempfänger empfangenen Signale zu bewerten. Im Empfangspfad ist ohnehin ein Referenzelement verzichtbar, weil dort ohnehin ein Lichtempfänger vorgesehen ist. Dieser kann im Grunde die Aufgabe des Referenzelements mit analogen Auswertungen übernehmen, oder ein Maß wie die Bildschärfe heranziehen.

Die Brennweitenregelung ist bevorzugt dafür ausgebildet, die tatsächliche Brennweite anhand der Krümmung des optischen Elements zu bewerten. Hier wird also nicht indirekt aus der Wirkung des optischen Elements auf seine Brennweite geschlossen, sondern direkt das optische Element vermessen. Auch damit ist eine präzise Rückkopplung möglich. Dies ist besonders bevorzugt dadurch realisiert, dass die Position eines von einer Außenkontur des optischen Elements reflektierten Lichtflecks ausgewertet wird. Die unterschiedliche Krümmung des optischen Elements führt zu einem veränderten Auftreffwinkel, der wiederum den Ort des Empfangs dieses reflektierten Lichtflecks verändert. Die Lage des reflektierten Lichtflecks ist deshalb ein direktes Maß für die Krümmung.

In einer besonders bevorzugten Ausführungsform ist der optoelektronische Sensor als Scanner ausgebildet, indem eine Ablenkeinheit vorgesehen ist, welche den Sendestrahl des Lichtsenders periodisch über einen Überwachungsbereich führt, und bei dem ein Referenzelement zur Bewertung des Sendestrahls in einem Scanwinkel außerhalb des Überwachungsbereichs angeordnet ist, und wobei insbesondere ein Startelement für den Scanbereich zugleich als Referenzelement für die Brennweitenregelung ausgebildet ist. Hier wird also kein Teilstrahl ausgekoppelt, sondern der gesamte Sendestrahl in einem Sensorzustand bewertet, bei dem er für die Überwachung ohnehin nicht verfügbar wäre. Wird dabei ein schon vorhandenes, als Startelement ausgebildetes Lichtempfangselement verwendet, so sind nicht einmal zusätzliche Bauteile erforderlich, es genügt bereits eine Auswertungsanpassung.

Das erfindungsgemäße Verfahren kann auf ähnliche Weise weitergebildet werden und zeigt dabei ähnliche Vorteile. Derartige vorteilhafte Merkmale sind beispielhaft, ober nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung einer Ausführungsform eines erfin- dungsgemäßen Sensors mit einer brennweitenverstellbaren Linse im Sen- depfad;
- Fig. 2: eine schematische Blockdarstellung eines Sensors mit einer brennweitenverstellbaren Linse im Empfangspfad;
- Fig. 3: eine vergrößerte Schnittdarstellung der brennweitenverstellbaren Linse gemäß Figur 1 und 2;
- Fig. 4a-d: Darstellungen zur Erläuterung der Bestimmung der Brennweite auf Basis eines Lichtflecks im Fernbereich (oben) und im Nahbereich (unten), der von verschiedenen Referenzempfängern aufgenommen wird;
- Fig. 5: eine Darstellung des Sendepfads einer Ausführungsform der Erfindung bei Fokuslage im Nahbereich;
- Fig. 6: eine Darstellung gemäß Figur 6 bei Fokuslage im Fernbereich;
- Fig. 7: eine Darstellung des Sendepfads einer weiteren Ausführungsform der Er- findung mit in die brennweitenverstellbare Linse integrierter Kollimatorlinse für den Sendestrahl;
- Fig. 8: eine Darstellung einer weiteren Ausführungsform der Erfindung als Codele- ser;
- Fig. 9a: eine Darstellung einer möglichen unmittelbaren Bestimmung der Krüm- mung einer brennweitenverstellbaren Linse bei Fokussierung im Nahbe- reich; und
- Fig. 9b: eine Darstellung gemäß Figur 9a bei Fokussierung im Fernbereich.

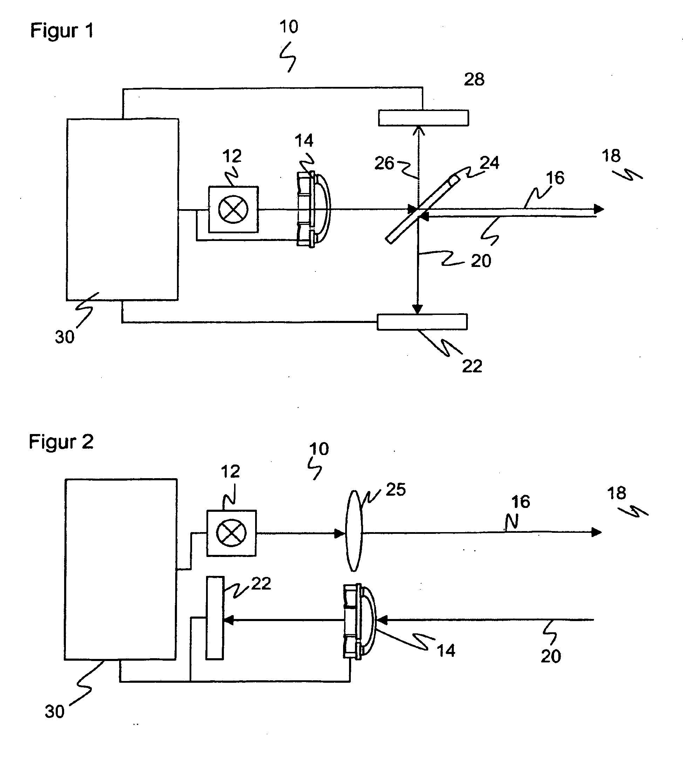

Figur 1 zeigt in einer vereinfachten Darstellung den Grundaufbau eines optoelektronischen Sensors 10. Ausschnitte dieses Grundaufbaus werden weiter unten erneut dargestellt und mit weiteren Details beschrieben.

Das Licht eines Lichtsenders 12, beispielsweise eine Halbleiterlichtquelle wie eine LED oder ein Laser, wird durch eine brennweitenverstellbare Linse 14 als Sendelichtstrahl 16 in einen Überwachungsbereich 18 ausgestrahlt. Dort wird ein Teil des Lichts von Objekten, Reflektoren oder sonstigen Oberflächen reflektiert oder remittiert und gelangt als Empfangslicht 20 zurück zu dem Sensor 10. Ein Lichtempfangselement 22 registriert das Empfangslicht 20 und wandelt es in ein elektrisches Signal um.

In dem Ausführungsbeispiel der Figur 1 ist ein Teilerspiegel 24 vorgesehen, beispielsweise eine beschichtete oder unbeschichtete Glasplatte, welche einen Teil des Sendelichts als Sendelichtstrahl 16 transmittiert und einen Teil des Sendelichts als Referenzlichtstrahl 26 auskoppelt. Der Referenzlichtstrahl 26 trifft auf einen Referenzlichtempfangselement 28 und wird dort in ein elektrisches Signal umgewandet. Der Teilerspiegel 24 lenkt außerdem das zurückkehrende Empfangslicht 20 auf den Lichtempfänger 22 um. Der transmittierte Anteil des Empfangslichts 20 ist in Figur 1 nicht dargestellt.

Eine Auswertungseinheit 30, die als digitaler Logikbaustein ausgebildet sein kann, empfängt die Signale von dem Lichtempfangselement 22 und dem Referenzlichtempfangselement 28 und ist weiterhin mit dem Lichtsender 12 zur Einstellung von Aktivität und Intensität sowie der Linse 14 zur Einstellung der Brennweite verbunden. Aufgrund der Signale von dem Referenzlichtempfangselement 28 bewertet die Auswertungseinheit 30 die tatsächliche Fokuslage der brennweitenverstellbaren Linse 14 und regelt diese durch entsprechende Steuerbefehle an die Linse 14 auf eine Sollgröße.

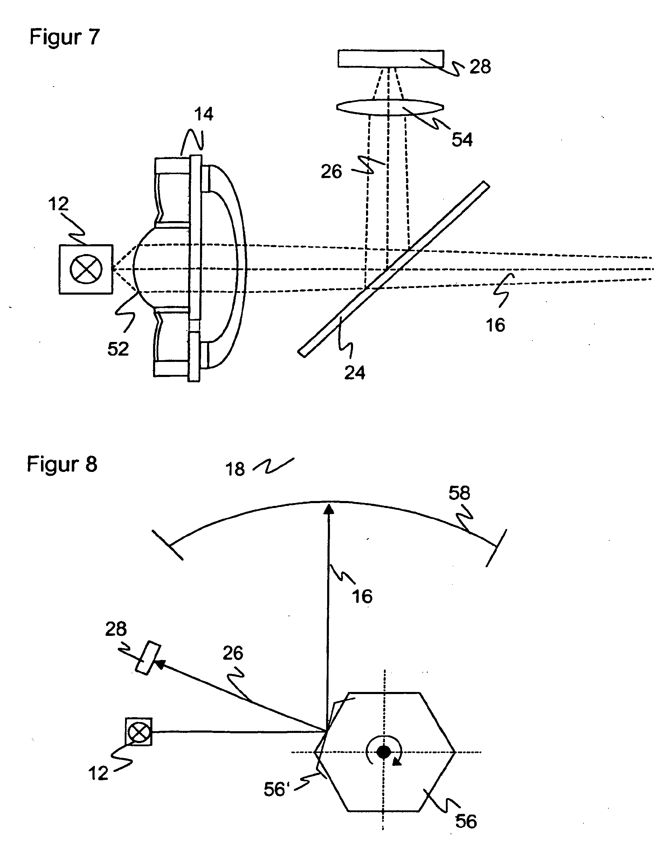

Der Grundaufbau kann durch ein anderes Prinzip ersetzt werden, beispielsweise einen Aufbau nach dem Doppelaugenprinzip, bei dem Lichtsender und Lichtempfänger mit jeweils einer Linse nebeneinander angeordnet sind, oder ein Aufbau, bei dem der Lichtsender vor dem deutlich größeren Lichtempfänger sitzt und deshalb nur einen vernachlässigbaren Anteil für das zurückkehrende Licht verdeckt. Auch ein Aufbau als scannendes System ist möglich, wie später im Zusammenhang mit Figur 8 dargestellt.

Figur 2 zeigt eine: Sensor mit einer brennseitenverstellbaren Liuse im strahtengang. Hier wie im Folgenden bezeichnen gleiche Bezugszeichen die gleichen Merkmale. Dieser Sensor unterscheidet sich von demjenigen gemäß Figur 1 darin, dass die verstellbare Linse 14 statt im Sendepfad im Empfangspfad vor dem Lichtempfänger 22 angeordnet ist. Ein zusätzliches Referenzelement gemäß Anspruch 1 liegt hier nicht vor. Beispielhaft ist statt einem System mit Teilerspiegel wie in Figur 1 ein System mit getrenntem Sende- und Empfangskanal dargestellt, wobei eine zusätzliche Optik oder Linse 25 den Sendestrahl fokussiert. Auch die oben genannten Sensortypen sind alternativ denkbar. Eine Möglichkeit, die Fokuslage zu bewerten, ist hier die Bildschärfe oder andere Informationen des Lichtempfängers 22. Die Linse 14 wird dann auf einen Sollwert oder auf eine Brennweite größter Bildschärfe geregelt. Anstelle des dargestellten Sensors 10, der ein Lichttaster oder eine Lichtschranke sein kann, ist hier auch eine Kamera vorstellbar. Ein mögliches Regelvorgehen besteht darin, per Software in der Auswertungseinheit 30 die Linse 14 so zu regeln, dass das Bild maximaler Schärfe erreicht wird.

Um die Fokuslage einzustellen, gibt die Auswertungseinheit 30 zunächst einen Steuerbefehl mit einem Sollwert für die Brennweite an die Linse 14 aus. Die gewünschte Brennweite kann ein Standardwert sein, aber auch ein Wert, der aus einer integrierten oder externen Abstandsbestimmung ermittelt ist. Über die optische Rückkopplung mittels Referenzlichtempfänger 28 und/oder Lichtempfänger 22 stellt die Auswertungseinheit 30 fest, welche Brennweite tatsächlich vorliegt, oder ob der Sendelichtstrahl beziehungsweise das Bild auf dem Lichtempfänger Vorgaben entspricht. Ist das nicht der Fall, wird unter weiterer Berücksichtigung der jeweiligen Rückkopplung nachgeregelt.

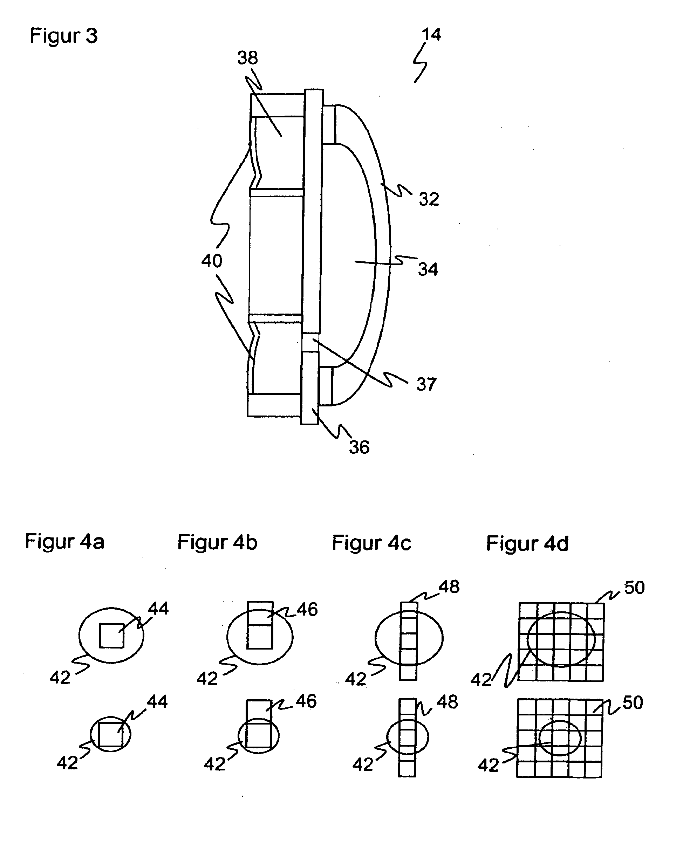

Figur 3 zeigt vergrößert eine mögliche Ausgestaltung der brennweitenverstellbaren Linse 14 im Schnitt. Sie basiert auf dem Prinzip der Integration von Mikroaktorik zur Veränderung der Krümmung einer Linsenfläche. Eine Membran 32, beispielsweise aus Silikon, ist über eine flüssigkeitsgefüllte Linsenkammer 34 geführt und ändert ihre Krümmung und damit die Brennweite der Linse 14 abhängig von dem Druck in der Linsenkammer 34. Eine Glasplatte 36 schließt die Linsenkammer 34 auf einer der Membran 32 gegenüberliegenden Seite ab. Sie ist über eine oder mehrere Öffnungen 37 mit einer Pumpkammer 38 verbunden. Eine elektrisch ansteuerbare Mikroaktorik 40, beispielsweise ein Piezo-Biegewandler, pumpt zur Veränderung der Brennweite Flüssigkeit aus der Pumpkammer 38 in die Linsenkammer 34 oder umgekehrt. Entsprechend der Pumprichtung steigt oder sinkt der Druck in der Linsenkammer 34, um die Brennweite der Linse 14 zu verstellen.

Dabei ergibt sich ein Zusammenhang zwischen Brennweite und Piezospannung, etwa ein hyperbolischer, der eine Hysterese zeigt. Der Zusammenhang wird bei der Wahl der zunächst angelegten Spannung für eine Sollbrennweite berücksichtigt. Die Hysterese kann, wenn sie stabil ist, ebenfalls aus der Historie der zuletzt verwendeten Brennweiten durch Zu- und Abschläge auf die Steuerspannung berücksichtigt werden. Nicht berücksichtigte oder nicht vorhersagbare Effekte wie eine unbekannte oder über die Betriebszeit veränderte Hysterese, Alterungseffekte, Materialveränderungen und dergleichen werden durch die Regelung korrigiert.

Die Figuren 4a bis 4d zeigen die Aufnahme eines Lichtstrahls auf verschiedenen Typen von Lichtempfangselementen 22 oder Referenzlichtempfangselementen 28 im Fernbereich (oben) und im Nahbereich (unten), um Möglichkeiten der Bewertung der tatsächlichen Fokuslage zu illustrieren. Dabei kann die Bewertung je nach Ausführungsform das Sendelicht oder das Empfangslicht betreffen

In Figur 4a trifft der Spot oder Lichtfleck 42 auf eine Einzelphotodiode 44, deren aktive Fläche in etwa den zu erwartenden Größen des Lichtflecks 42 entspricht. Die Fokuslage wird hier auf Basis der Intensität, also des Pegels bewertet. Wie in der Figur 4a gut erkennbar, trifft bei naher Fokuslage ein wesentlich größerer Lichtanteil auf die Photodiode 44. Andererseits besteht aber eine Abhängigkeit vom Gesamtpegel und damit beispielsweise von der Entfernung des Zielobjekts.

In der Ausführungsform gemäß Figur 4b ist deshalb eine Doppelphotodiode oder Differenzphotodiode 46 vorgesehen. Wegen der möglichen Bezugnahme auf die zweite Photodiode ist der Absolutpegel kompensiert, etwa bei Auswertung des Quotienten Differenz der Einzelsignale geteilt durch Summe der Einzelsignale. Noch genauere Auswertungen sind möglich, wenn wie in Figur 4c eine Zeile 48 oder in Figur 4d eine Matrix 50 von Lichtempfangselementen eingesetzt wird. Damit kann die Spotgröße oder die Form des Lichtflecks 44 mit noch höherer Genauigkeit in einer oder mehreren Dimensionen bewertet werden.

Die Auswertungseinheit 30 hat Zugriff auf eine intern oder extern gespeicherte Korrekturtabelle, welche eine Zuordnung zwischen den aufgenommenen Signalen von Lichtempfangselement 22 oder Referenzlichtempfangselement 28 und zugehöriger tatsächlicher Brennweite liefert. Alternativ kann auch eine Rechenvorschrift abgelegt sein, welche zu einem Signal die zugehörige Brennweite liefert. Solche Daten können beim Geräteabgleich in der Endprüfung schon vor Auslieferung oder vor Ort durch eine Kalibrierfunktion bestimmt und eingelernt werden.

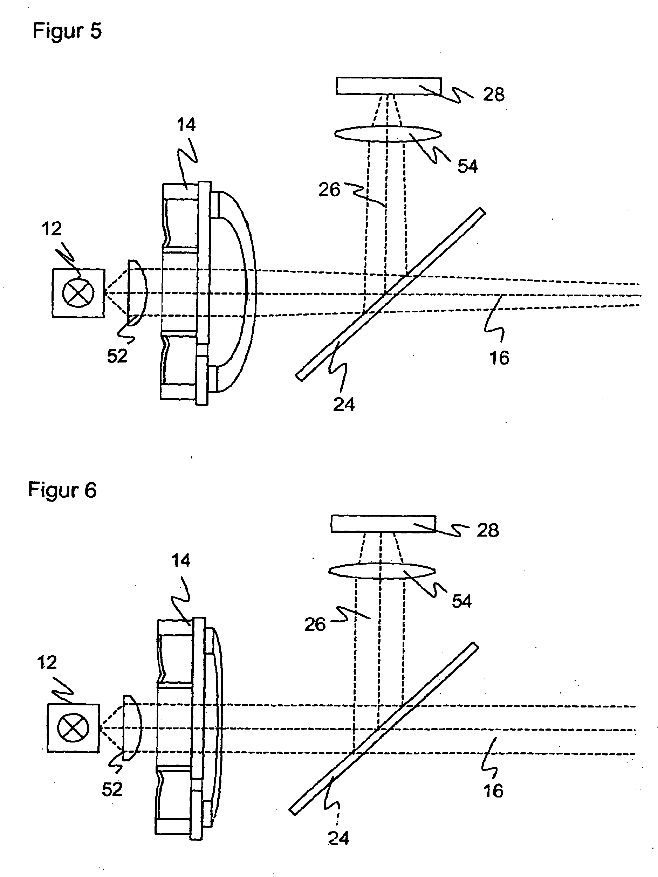

Figur 5 zeigt den Sendepfad einer Ausführungsform des erfindungsgemäßen Sensors 10 mit in gestrichelten Linien dargestelltem Strahlengang bei Fokussierung im Nahbereich. Zusätzlich zu der brennweitenverstellbaren Linse 14 ist eine weitere Linse 52 vorgesehen, welche aus dem von dem Lichtsender 12 emittierten Licht einen kollimierten Sendestrahl erzeugt. Die Linse 52 erfüllt in einigen Anwendungen zusätzlich die Aufgabe einer Korrekturlinse, beispielsweise wenn der Verstellbereich der brennweitenverstellbaren Linse 14 nicht ausreicht. Eine weitere Sammellinse 54 fokussiert das Spotabbild des Referenzlichtstrahls auf dem Referenzlichtempfangselement 28. Ein Vergleich mit Figur 6, welches denselben Sendepfad bei Fokussierung im Fernbereich darstellt, illustriert am Strahlengang zwischen der Sammellinse 54 und dem Referenzlichtempfangselements 28 das Zustandekommen der unterschiedlichen Spotbreiten, wie sie jeweils im oberen und unteren Teil der Figuren 4a und 4d gezeigt sind.

Figur 7 zeigt eine weitere Ausführungsform der Erfindung, bei der die Kollimatorlinse 52 in die brennweitenverstellbaren Linse 14 integriert ist. Die beiden Linsen 14, 52 bilden also eine Einheit. Dazu wird eine optomechanische Verbindung beispielsweise durch Kitten geschaffen. Ebenso ist denkbar, die der Membran 32 gegenüberliegende Planfläche der Linse 14 konvex oder konkav zu gestalten. Dieser Fläche können auch weitere optische Eigenschaften etwa mittels eines DOEs oder einer Freiformfläche gegeben werden.

In einer weiteren Ausführungsform der Erfindung ist der optoelektronische Sensor 10 als Laserscanner, insbesondere als Codeleser ausgebildet. Figur 8 illustriert den Sendepfad eines solchen Laserscanners. Ein Ablenkelement 56, beispielhaft als drehbares Polygonspiegelrad dargestellt, führt den Sendestrahl 16 periodisch über einen Scanbereich 58. In einer anderen Position 56' des Ablenkelements 56 ist der Sendestrahl als Referenzlichtstrahl 26 auf das Referenzlichtempfangselement 28 geführt

Je nach Scanwinkel, der durch die Drehung des Ablenkelements 56 vorgegeben ist, wird also ein Lichtstrahl auf das Referenzlichtempfangselement 28 oder in den Überwachungsbereich 12 geführt. Anders als in den Ausführungsformen mit einem Teilerspiegel 24 wird hierbei der gesamte Sendestrahl für die Brennweitenbestimmung verwendet. Es ist aber abweichend von der Darstellung auch möglich, den Referenzlichtstrahl 26 mit einem zusätzlichen Teilerspiegel auszukoppeln und unabhängig von einem Scanwinkel zu bewerten.

An der Position des Referenzlichtempfangselements 28 ist in manchen Laserscannern oder Codelesern bereits ein Lichtempfangselement vorgesehen, welches als Startelement dient. Es erkennt, wann der Scanwinkel erreicht ist, bei dem der Lichtstrahl in den Scanbereich eintritt. Das auf ein solches Startelement auftreffende Signal kann dann auch hinsichtlich der Brennweite ausgewertet, das Startelement also in einer Doppelfunktion auch als Referenzlichtempfangselement 28 verwendet werden.

Selbstverständlich kann das Referenzlichtempfangselement 28 auch bei einem anderen Scanwinkel angeordnet sein, wobei eine Lage außerhalb des Scanbereichs deutlich bevorzugt ist, weil sonst der Betrieb zumindest punktuell gestört würde.

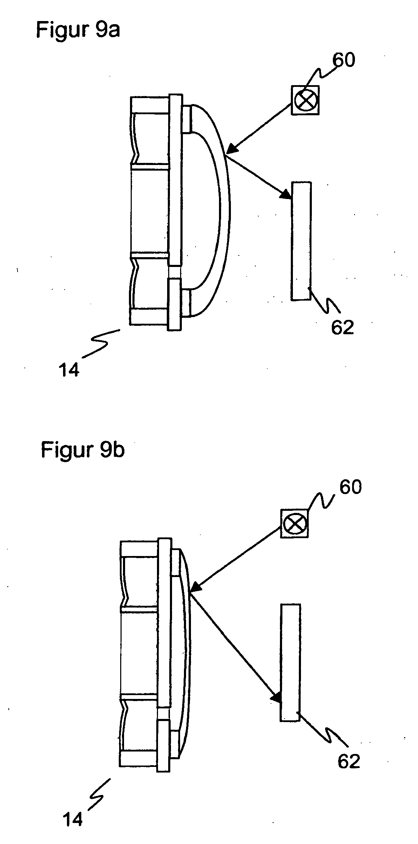

Figur 9 zeigt eine mögliche Realisierung zur unmittelbaren Bestimmung der Krümmung der brennweitenverstellbaren Linse 14. Mit einem Testsender 60 wird ein Lichtstrahl auf eine Außenkontur der brennweitenverstellbaren Linse 14 ausgesandt und der Lichtreflex auf einem positionsempfindlichen Testempfänger 62, also etwa einer PSD oder einer Bildsensorzeile oder -matrix registriert. Wie das Beispiel der Figur 9a bei Fokussierung im Nahbereich gegenüber dem Beispiel der Figur 9b bei Fokussierung im Fernbereich zeigt, trifft der Testlichtstrahl durch die unterschiedliche Krümmung und möglicherweise zusätzlich noch zum Teil durch den geänderten Lichtweg an unterschiedlichen Positionen auf dem Testempfänger 62 auf. Die Position ist damit ein unmittelbar bestimmtes Maß für die Krümmung und damit Brennweite der brennweitenverstellbaren Linse 14.

Die Darstellungen in Figur 9 sind nur sehr vereinfachte Prinzipdarstellungen. Es sind andere Möglichkeiten denkbar, die Krümmung der brennweitenverstellbaren Linse 14 unmittelbar zu bestimmen. Der Testsender 62 kann beispielsweise auch eine Auskopplung des Lichtsender 12 sein. Ebenso kann als Testempfänger 62 das Lichtempfangselement 14 oder das Referenzlichtempfangselement 28 eingesetzt werden, wobei zur Aus- und Einkoppelung des Lichts Umlenkoptiken wie Spiegel, Teilerspiegel, Prismen und dergleichen vorgesehen sein können. Der Testlichtstrahl sollte bevorzugt nur periodisch aktiv sein, da sein Streulicht die eigentliche Funktion des Sensors 10 beeinträchtigen könnte. Ebenso ist denkbar, in diesen Testperioden die eigentliche Sensorfunktion zu deaktivieren bzw. entsprechende kurze oder längere Betriebspausen für den Brennweitentest zu nutzen.

## Patentansprüche

1. Optoelektronischer Sensor (10) mit einem Lichtsender (12) zum Aussenden eines Sendestrahls (16) und einem Lichtempfänger (22), wobei dem Lichtsender (12) ein optisches Element (14) in Form einer Flüssigkeits- oder Gellinse zugeordnet ist, deren Brennweite durch Vorgabe einer Steuergröße verstellbar ist, wobei eine Brennweitenregelung (28, 30) für das optische Element (14) vorgesehen ist, welche dafür ausgebildet ist, die tatsächliche Brennweite des optischen Elements (14) zu bewerten und auf einen Sollwert zu regeln,
**dadurch gekennzeichnet,**
**dass** die Brennweitenregelung zusätzlich zu dem Lichtempfänger (22) ein Referenzelement (28) mit mehreren Photodioden (44, 46), einer Zeile (48) oder einer Matrix (50) von Lichtempfangselementen zur Bewertung des Sendestrahls (26) anhand einer Intensität, eines Intensitätsverhältnisses, einer Spotform und/oder einer Spotgröße aufweist, dass das optische Element (14) einen flüssigkeitsgefüllten Hohlraum (34) aufweist, der zumindest an einer Seite von einer Membran (32) abgeschlossen ist, die dafür ausgebildet ist, bei Druckveränderungen der Flüssigkeit in dem Hohlraum (34) ihre Krümmung zu verändern, und dass Pumpelemente (40) vorgesehen sind, um Druckveränderungen durch Pumpen von Flüssigkeit in den Hohlraum (34) oder aus dem Hohlraum (34) zu erzeugen.

2. Sensor (10) nach Anspruch 1,
wobei das optische Element (14) eine brennweitenverstellbare optisch aktive Fläche (32) und eine weitere optisch aktive Fläche (52) aufweist, die insbesondere als Kollimatorlinse ausgebildet ist.

3. Sensor (10) nach Anspruch 1 oder 2,
wobei dem optischen Element (14) ein optisches Verzweigungselement (24) zugeordnet ist, insbesondere ein Strahlteiler oder ein Teilerspiegel, um einen Teilstrahl (26) des Sendestrahls (16) zur Bewertung der tatsächlichen Brennweite auszukoppeln.

4. Sensor (10) nach einem der vorhergehenden Ansprüche,
wobei die Brennweitenregelung (30) eine Tabelle oder eine Berechnungsvorschrift hält, welche eine Zuordnung zwischen tatsächlicher Brennweite und Signalen des Referenzelements (28) schafft.

5. Sensor (10) nach einem der vorhergehenden Ansprüche,
wobei ein Temperaturfühler vorgesehen ist und wobei die elektrische Steuergröße von der Brennweitenregelung temperaturabhängig veränderbar ist, insbesondere indem die Tabelle oder Berechnungsvorschrift verschiedene Temperaturen berücksichtigt.

6. Sensor (10) nach einem der vorhergehenden Ansprüche,
wobei die Brennweitenregelung (30) dafür ausgebildet ist, die tatsächliche Brennweite anhand der Krümmung des optischen Elements (14) zu bewerten, insbesondere durch Auswertung der Position eines von einer Außenkontur des optischen Elements (14) reflektierten Lichtflecks.

7. Sensor (10) nach einem der vorhergehenden Ansprüche,
der als Scanner ausgebildet ist, indem eine Ablenkeinheit (56) vorgesehen ist, welche den Sendestrahl (16) des Lichtsenders (12) periodisch über einen Überwachungsbereich (18, 58) führt, und bei dem ein Referenzelement (28) zur Bewertung des Sendestrahls (16) in einem Scanwinkel außerhalb des Überwachungsbereichs (18, 58) angeordnet ist, und wobei insbesondere ein Startelement für den Scanbereich (58) zugleich als Referenzelement (28) für die Brennweitenregelung (28, 30) ausgebildet ist.

8. Verfahren zum Fokussieren eines optoelektronischen Sensors (10), bei dem die Brennweite eines einem Lichtsender (12) zugeordneten optischen Elements (14) in Form einer Flüssigkeits- oder Gellinse durch Vorgabe einer Steuergröße verstellt wird, wobei die tatsächliche Brennweite des optischen Elements (14) bewertet und auf einen vorgegebenen Sollwert geregelt wird,
**dadurch gekennzeichnet, dass**
ein Teil (26) eines Sendestrahls (26) des Lichtsenders (12) ausgekoppelt und in einem Referenzelement (28) mit mehreren Photodioden (44, 46), einer Zeile (48) oder einer Matrix (50) von Lichtempfangselementen anhand einer Intensität, eines Intensitätsverhältnisses, einer Spotform und/oder einer Spotgröße bewertet wird und dass die Brennweite verstellt wird, indem die Krümmung einer Membran (32), welche zumindest an einer Seite einen Hohlraum (34) des optischen Elements (14) abschließt, mittels Erhöhen oder Erniedrigen eines Flüssigkeitsdrucks in dem Hohlraum (34) durch Pumpen einer Flüssigkeit in den Hohlraum (34) oder aus dem Hohlraum (34) verändert wird.

9. Verfahren nach Anspruch 8,
wobei der ausgekoppelte Teil des Sendestrahls (26) auf Basis einer Tabelle oder Berechnungsvorschrift, welche eine Zuordnung zwischen tatsächlicher Brennweite und Signalen des Referenzelements (28) schafft, bewertet wird.

10. Verfahren nach Anspruch 8 oder 9,
wobei die tatsächliche Brennweite anhand der Krümmung des optischen Elements (14) bewertet wird, wobei insbesondere Licht auf eine Außenkontur des optischen Elements gelenkt (14) und die Position eines entstehenden Lichtreflexes ausgewertet wird.

## Claims

1. An optoelectronic sensor (10) having a light transmitter (12) for transmitting a transmitted beam (16) and having a light receiver (22), wherein an optical element (14) is associated with the light transmitter (12), said optical element (14) being a liquid lens or a gel lens whose focal length can be set by defining a control parameter, with a focal length regulation (28, 30) being provided for the optical element (14) and being designed to evaluate the actual focal length of the optical element (14) and to regulate it to a desired value,
**characterised in that**
the focal length regulation has, in addition to the light receiver (22), a reference element (28) having a plurality of photodiodes (44, 46), a line (48) or a matrix (50) of light reception elements for evaluating the transmitted beam (26) with reference to an intensity, to an intensity ratio, to a spot shape and/or to a spot size, **in that** the optical element (14) has a liquid-filled hollow space (34) which is terminated at at least one side by a membrane (32) which is designed to change its curvature on pressure changes of the liquid in the hollow space (34), and **in that** pump elements (40) are provided to generate pressure changes by pumping liquid into the hollow space (34) or out of the hollow space (34).

2. A sensor (10) in accordance with claim 1,
wherein the optical element (14) has an optical active surface (32) with an adjustable focal length and has a further optically active surface (52) which is in particular made as a collimator lens.

3. A sensor (10) in accordance with claim 1 or 2,
wherein an optical branching element (24) is associated with the optical element (14), said optical element in particular being a beam splitter or a divider mirror, to decouple a part beam (26) of the transmitted beam (16) for evaluating the actual focal length.

4. A sensor (10) in accordance with any one of the preceding claims,
wherein the focal length regulation (30) contains a table or a calculation rule which provides an association between the actual focal length and signals of the reference element (28).

5. A sensor (10) in accordance with any one of the preceding claims,
wherein a temperature sensor is provided, and wherein the electric control parameter is changeable by the focal length regulation in dependence on the temperature, in particular in that the table or calculation rule takes different temperatures into account.

6. A sensor (10) in accordance with any one of the preceding claims,
wherein the focal length regulation (30) is designed to evaluate the actual focal length with reference to the curvature of the optical element (14), in particular by evaluation of a light spot reflected by an outer contour of the optical element (14).

7. A sensor (10) in accordance with any one of the preceding claims,
which is designed as a scanner in that a deflection unit (56) is provided which guides the transmitted beam (16) of the light transmitter (12) periodically over a monitored zone (18, 58), and wherein a reference element (28)) for evaluating the transmitted beam (16) in a scanning angle is arranged outside the monitored zone (18, 58), and wherein in particular a start element for the scan zone (58) is simultaneously designed as a reference element (28) for the focal length regulation (28, 30).

8. A method for focusing an optoelectronic sensor (10), wherein the focal length of an optical element (14) formed as a liquid lens or a gel lens and associated with a light transmitter (12) is adjusted by definition of a control parameter, with the actual focal length of the optical element (14) being evaluated and being regulated to a defined desired value,
**characterised in that**
a part (26) of a transmitted beam (26) of the light transmitter (12) is decoupled and is evaluated in a reference element (28) having a plurality of photodiodes (44, 46), a line (48) or a matrix (50) of light reception elements with reference to an intensity, to an intensity ratio, to a spot shape and/or to a spot size, and **in that** the focal length is adjusted **in that** the curvature of a membrane (32) which terminates a hollow space (34) of the optical element (14) at at least one side is changed by means of increasing or decreasing a liquid pressure in the hollow space (34) by pumping a liquid into the hollow space (34) or out of the hollow space (34).

9. A method in accordance with claim 8,
wherein the decoupled part of the transmitted beam (26) is evaluated on the basis of a table or of a calculation rule which provides an association between the actual focal length and the signals of the reference element (28).

10. A method in accordance with claim 8 or 9,
wherein the actual focal length is evaluated with reference to the curvature of the optical element (14), wherein in particular light is directed onto an outer contour of the optical element (14) and the position of an arising light reflection is evaluated.

## Revendications

1. Capteur optoélectronique (10) comprenant un émetteur de lumière (12) pour émettre un rayon d'émission (16) et un récepteur de lumière (22), dans lequel un élément optique (14) qui est une lentille à liquide ou une lentille à gel est associé à l'émetteur de lumière (12), élément optique dont la distance focale est réglable par imposition d'une grandeur de commande, dans lequel il est prévu une régulation de distance focale (28, 30) pour l'élément optique (14), laquelle est réalisée pour évaluer la distance focale réelle de l'élément optique (14) et pour la réguler à une valeur de consigne,
**caractérisé en ce que**
la régulation de distance focale comprend, en supplément du récepteur de lumière (22), un élément de référence (28) avec plusieurs photodiodes (44, 46), avec une ligne (48) ou une matrice (50) d'éléments récepteurs de lumière pour évaluer le rayon d'émission (26) au moyen d'une intensité, d'un rapport d'intensité, d'une forme ponctuelle et/ou d'une taille ponctuelle, dans lequel l'élément optique (14) comprend une cavité (34) remplie d'un liquide, laquelle est refermée au moins sur un côté par une membrane (32) qui est réalisée pour modifier sa courbure lors de variations de pression du liquide dans la cavité (34), et dans lequel il est prévu des éléments de pompage (40) afin d'engendrer des modifications de pression par pompage de liquide vers la cavité (34) ou hors de la cavité (34).

2. Capteur selon la revendication 1,
dans lequel l'élément optique (14) comporte une surface active sur le plan optique (32) réglable vis-à-vis de la distance focale, et une autre surface active sur le plan optique (52), qui est réalisée en particulier sous forme de lentille de collimation.

3. Capteur (10) selon la revendication 1 ou 2,
dans lequel un élément de branchement optique (24) est associé à l'élément optique (14), en particulier un diviseur de rayon ou un miroir semi-transparent, afin de découpler un rayon partiel (26) du rayon d'émission (16) pour évaluer la distance focale réelle.

4. Capteur (10) selon l'une des revendications précédentes,
dans lequel la régulation de distance focale (30) contient un tableau ou une instruction de calcul, qui établit une association entre la distance focale réelle et des signaux de l'élément de référence (28).

5. Capteur (10) selon l'une des revendications précédentes,
dans lequel il est prévu un capteur de température, et dans lequel la grandeur de commande électrique de la régulation de distance focale est modifiable en fonction de la température, en particulier par le fait que le tableau ou l'instruction de calcul tient compte de différentes températures.

6. Capteur (10) selon l'une des revendications précédentes,
dans lequel la régulation de distance focale (30) est réalisée pour évaluer la distance focale réelle au moyen de la courbure de l'élément optique (14), en particulier par évaluation de la position d'une tache de lumière réfléchie par un contour extérieur de l'élément optique (14).

7. Capteur (10) selon l'une des revendications précédentes,
qui est réalisé sous forme de scanneur, dans lequel il est prévu une unité de déflexion (56) qui mène le rayon d'émission (16) de l'émetteur de lumière (12) périodiquement sur une zone de surveillance (18, 58), et dans lequel un élément de référence (28) pour l'évaluation du rayon d'émission (16) est agencé dans un angle de scannage extérieur à la zone de surveillance (18, 58), et dans lequel un élément de départ pour la zone de scannage (58) est en particulier réalisé simultanément comme élément de référence (28) pour la régulation de distance focale (28, 30).

8. Procédé pour focaliser un capteur optoélectronique (10), dans lequel la distance focale d'un élément optique (14), qui est une lentille à liquide ou à gel et est associé à un émetteur de lumière (12), est modifiée en imposant une grandeur de commande, et la distance focale réelle de l'élément optique (14) est évaluée et régulée à une valeur de consigne prédéterminée,
**caractérisé en ce que**
une partie (26) d'un rayon d'émission (26) de l'émetteur de lumière (12) est découplée et est évaluée dans un élément de référence (28) avec plusieurs photodiodes (44, 46), avec une ligne (48) ou une matrice (50) d'éléments récepteurs de lumière au moyen d'une intensité, d'un rapport d'intensité, d'une forme ponctuelle et/ou d'une taille ponctuelle, dans lequel la distance focale est modifiée en modifiant la courbure d'une membrane (32), qui referme au moins sur un côté une cavité (34) de l'élément optique (14), en augmentant ou en diminuant une pression du liquide dans la cavité (34) par pompage d'un liquide vers la cavité (34) ou hors de la cavité (34).

9. Procédé selon la revendication 8,
dans lequel la partie découplée du rayon d'émission (26) est évaluée en se basant sur un tableau ou sur une instruction de calcul qui établit une association entre la distance focale réelle et les signaux de l'élément de référence (28).

10. Procédé selon la revendication 8 ou 9,
dans lequel la distance focale réelle est évaluée au moyen de la courbure de l'élément optique (14), dans lequel en particulier la lumière est défléchie vers un contour extérieur de l'élément optique, et la position d'une réflexion de lumière résultante est évaluée.
